# EUROPÄISCHE PATENTSCHRIFT

(11) **EP 3 546 931 B1**
(45) Veröffentlichungstag und Bekanntmachung des Hinweises auf die Patenterteilung: **21.07.2021**
(21) Anmeldenummer: 18164748.8
(22) Anmeldetag: 28.03.2018
(51) Int. Cl.: G01N 27/18, G01F 1/684, G01N 30/64

(54) **THERMORESISTIVER GASSENSOR, STRÖMUNGSSENSOR UND WÄRMELEITFÄHIGKEITSSENSOR**
THERMORESISTIVE GAS SENSOR, FLOW SENSOR AND THERMAL CONDUCTIVITY SENSOR
CAPTEUR DE GAZ THERMORÉSISTIF, DETECTEUR D'ÉCOULEMENT ET CAPTEUR DE CONDUCTIVITÉ THERMIQUE

(43) Veröffentlichungstag der Anmeldung: 02.10.2019
(73) Patentinhaber: Siemens Aktiengesellschaft, 80333 München (DE)
(72) Erfinder: Strauch, Piotr, 76761 Rülzheim (DE); Zettner, Jürgen, Dr., 90587 Veitsbronn (DE); von Dosky, Stefan, Dr., 76149 Karlsruhe (DE); Kisban, Sebastian, Dr., 80803 München (DE); Klehr, Stefan, 76764 Rheinzabern (DE); Neuhauser, Thomas, Bartlesville 74006 (US); Zapf, Jörg, 81927 München (DE)

(56) Entgegenhaltungen:
- EP-A1- 1 757 910
- EP-A1- 2 431 737
- EP-A1- 3 096 137
- WO-A1-2009/095494
- WO-A1-2009/153099
- WO-A1-2013/017406
- US-A1- 2015 377 813

## Beschreibung

Die Erfindung betrifft einen thermoresistiven Gassensor.

Ein thermoresistiver Sensor oder Detektor ist ein Messfühler mit einem elektrischen Widerstand, dessen Wert sich mit der Temperatur reproduzierbar ändert. Solche Widerstände werden auch als Thermistoren bezeichnet, wobei zwischen Thermistoren mit positivem Temperaturkoeffizient (PTC, Kaltleiter) und Thermistoren mit negativem Temperaturkoeffizient (NTC, Heißleiter) unterschieden wird. Zu den Kaltleitern zählen insbesondere Metalle, wobei vorzugsweise Platin und Nickel verwendet werden, und als nichtmetallische Materialien polykristalline Keramiken, z. B. auf der Basis von Bariumtitanat, und dotierte Halbleiter, z. B. Silizium, mit Störstellenerschöpfung. Zu den Heißleitern zählen insbesondere reine oder dotierte Halbleiter außerhalb des Bereichs der Störstellenerschöpfung sowie polykristalline Halbleiter aus Metalloxiden.

Thermoresistive Gassensoren finden beispielsweise als Strömungsfühler oder Wärmeleitfähigkeitsdetektoren in der Gasanalyse oder in der Medizintechnik (z. B. Anästhesie- oder Beatmungsgeräte) Anwendung.

Bei der thermischen Anemometrie wird ein Strömungssensor mit einem Sensorelement verwendet, das elektrisch beheizt wird und dessen elektrischer Widerstand von der Temperatur abhängt. Bei Umströmung mit einem Fluid findet ein Wärmetransport in das Fluid statt, der sich mit der Strömungsgeschwindigkeit verändert. Durch Messung der elektrischen Größen des Sensorelements können die Strömung detektiert und ihre Geschwindigkeit oder der Massenstrom des Fluids gemessen werden. Insbesondere zur Erfassung von Wechselströmungen kann der Strömungssensor zusammen mit einem stromaufwärts und/oder stromabwärts angeordneten weiteren Strömungssensor in der Strömung angeordnet sein, so dass ein Übersprechen in Form eines - bei periodisch wechselnder Strömung entsprechend wechselnden - Wärmeaustauschs zwischen den Strömungssensoren stattfindet. Dies kann in an sich bekannter Weise mittels einer elektrischen Messbrücke gemessen werden, in der die Strömungssensoren in unterschiedlichen Brückenzweigen angeordnet sind.

Wärmeleitfähigkeitsdetektoren dienen zum Nachweis bestimmter flüssiger oder gasförmiger Stoffe (Fluide) anhand ihrer stofftypischen Wärmeleitfähigkeit und werden insbesondere in der Gaschromatographie eingesetzt. Dazu werden die nachzuweisenden Stoffe nach ihrer chromatographischen Trennung nacheinander in einem Kanal an einem dort angeordneten und elektrisch beheizten Heizelement (z. B. einem Heizfaden aus Gold oder Platin) vorbeigeführt, wobei je nach Wärmeleitfähigkeit des vorbeiströmenden Stoffes mehr oder weniger Wärme von dem Heizelement auf die Kanalwandung abgeleitet wird und das Heizelement dementsprechend mehr oder weniger abkühlt. Durch die Abkühlung des Heizelements ändert sich dessen elektrischer Widerstand, was detektiert wird. Wird das Heizelement auf konstante Temperatur geregelt, so wird die sich ändernde elektrische Heizleistung detektiert. Das Heizelement ist üblicherweise in einer Messbrücke angeordnet, die weitere Widerstände und ein weiteres Heizelement in einem von einem Referenzfluid durchströmten weiteren Kanal enthält.

Die Detektionsempfindlichkeit des Wärmeleitfähigkeitsdetektors ist umso größer je größer die Temperaturdifferenz zwischen dem Heizelement und der Kanalwandung ist, wobei hohe Temperaturen die Standzeit des Heizelementes, z. B. des Heizfadens, beeinträchtigen. Die Empfindlichkeit hängt auch von dem spezifischen elektrischen Widerstand des Heizfadens ab, weil dadurch bei vorgegebener Geometrie des Heizfadens dessen Gesamtwiderstand gegeben ist. Je größer dieser Gesamtwiderstand ist, umso größer ist auch die Detektionsempfindlichkeit. Schließlich können chemisch aggressive Gase den Heizfaden angreifen und zersetzen.

Aus der DE 1 573 098 B1, DE 1 698 048 A1, DE 1 698 050 A1, DE 32 04 425 A1 oder WO 00/59824 A1 sind Einrichtungen zur Messung schwacher Gasströmungen in, z. B., einem Gasanalysengerät bekannt, bei denen zwei Strömungssensoren in Strömungsrichtung des zu messenden Gases unmittelbar hintereinander angeordnet sind. Die Strömungssensoren bestehen jeweils aus einem elektrisch aufheizbaren Metallgitter, das, wo es in den genannten Dokumenten näher beschrieben wird, jedes Mal mäanderförmig ausgebildet ist. Die Metallgitter sind zusammen mit zwei Ergänzungswiderständen in einer Wheatstonebrücke angeordnet. Wie die DE 1 698 048 A1, DE 32 04 425 A1 oder WO 00/59824 A1 zeigen, können die Metallgitter innerhalb eines Plattenverbunds auf beiden Seiten einer isolierenden Abstandsplatte aufgebracht und mit Deckplatten abgedeckt sein. Die Platten enthalten Fenster für das durchströmende Gas, über die sich die Metallgitter erstrecken.

Aus der WO 2013/017406 A1 ist ein Mikro-Gassensor zur Messung beispielsweise einer Gaskonzentration in einem Messgas auf Basis der Wärmeleitfähigkeit bekannt. Auf einem Silizium-Wafer wird lithographisch und ätztechnisch eine Vertiefung eingebracht, wobei eine Restdicke an Siliziummaterial stehen bleibt. Diese wird anschließend derart strukturiert, dass sich ein für das Messgas durchlässiges Gitter aus Stegen bildet. Eine auf dem Silizium-Wafer abgeschiedene Metall-Schicht wird derart strukturiert, dass ein elektrischer Leiter mäanderförmig über die Querschnittsfläche des Gitters verläuft, wobei eine Kontaktierungsmöglichkeit jeweils am hinteren und vorderen Ende des Leiters vorhanden ist. Optional können an dem Gitter mehrere Leiter parallel geführt werden.

Bei einem ähnlichen, aus der WO 2009/153099 A1 bekannten Mikroströmungsfühler ist das Metallgitter durch ein ebenfalls mäanderförmiges siliziumbasiertes Gitter ersetzt, dessen Widerstand im Bereich von einigen Kiloohm im Vergleich zu wenigen Ohm bei der Verwendung von Metallgittern liegt. Dieser höhere Widerstandswert führt zu einem verbesserten Signal-/Rausch-Verhältnis. Des Weiteren führt der im Vergleich zu Metallen größere Widerstandskoeffizient zu einer höheren Messempfindlichkeit, das heißt zu höheren temperaturabhängigen Widerstandsänderungen. Die Siliziumgitterstrukturen werden aus kristallinem Silizium erzeugt, beispielsweise durch die Verwendung von Silicon-On-Insulater (SOI-) Wafermaterial.

Aus der DE 42 24 518 A1 ist ein weiterer ähnlicher Mikroströmungsfühler mit zwei mäanderförmigen Gittern bekannt, die auf einer Vorderseite und einer dazu parallelen Rückseite eines Siliziumkörpers im Bereich eines den Siliziumkörper durchquerenden Strömungskanals angeordnet sind. Die Gitter können aus Metall oder polykristallinem Silizium bestehen und sind im Bereich des Strömungskanals freitragend oder auf Stützstrukturen angeordnet, die aus dielektrischen Schichten auf der Vorder- und Rückseite des Siliziumkörpers gebildet sind.

Aus der WO 2009/095494 A1 ist ein Wärmeleitfähigkeitsdetektor mit einem elektrisch beheizbaren Heizfaden bekannt, der in der Mitte und in Längsrichtung eines Kanals von einem Fluid umströmbar gelagert ist und dazu an seinen beiden Enden an zwei den Kanal durchquerenden elektrisch leitenden Trägern gehalten ist. Um eine hohe Standzeit und Inertheit gegenüber chemisch aggressiven Gasgemischen zu erhalten, bestehen der Heizfaden und die Träger aus dotiertem Silizium. Das dotierte Silizium kann unter Zwischenlage einer Isolierschicht aus Siliziumdioxid auf einem Siliziumsubstrat aufgebracht werden, wobei in Ätzprozessen durch Strukturieren des Siliziumsubstrats, der Siliziumdioxid-Schicht und der Schicht aus dem dotiertem Silizium die Träger und der Heizfaden gebildet und der Kanal in der Trägerplatte ausgeformt werden. Angesichts der Sprödigkeit von Silizium wird in der EP 3 096 133 A1 zur Erhöhung der mechanischen Stabilität vorgeschlagen, den beidseitig eingespannten Heizfaden durch einen extrem dünnen Kragbalken aus dotiertem Silizium zu ersetzen.

Aus der US 2015/0377813 A1 ist ein Gassensor (Wärmeleifähigkeitsdetektor) mit vier Heizfäden aus polykristallinem Silizium bekannt, die in einer Wheatstonebrücke elektrisch miteinander verbunden sind. Zwei diagonal in der Wheatstonebrücke gegenüber liegende Heizfäden sind parallel nebeneinander in einer Messkammer und die beiden anderen Heizfäden in einer Referenzkammer angeordnet.

Aus der EP 2 431 737 A1 ist ein Wärmeleifähigkeitsdetektor mit ebenfalls vier in einer Wheatstonebrücke elektrisch verschalteten Heizelementen bekannt. Jedes Heizelement besteht aus einem Balken aus Silizium, der eine Metall-Schicht trägt und unter Bildung jeweils eines Spaltes entlang von und zwischen zwei Wänden verläuft. Um zu verhindern, dass sich der Balken aufgrund seiner Temperaturausdehnung ausbeult und dabei die eine oder andere Wand berührt, ist er in der Mitte zwischen den beiden Balkenenden in einem vorbestimmten Winkel gefaltet; d. h., der Balken und die ihn begleitenden Wände bzw. Spalte sind V-förmig.

Aus der EP 1 757 910 A1 ist ein Strömungsfühler mit zwei Heizwiderständen oder zwei Paaren von Heizwiderständen bekannt, die auf einem planaren Substrat ausgebildet sind. Die Heizwiderstände sind in Richtung der Gasströmung voneinander beabstandet und erstrecken sich quer dazu über eine Öffnung in dem Substrat. Unter Bezugnahme auf den Stand der Technik ist ferner eine Messkammer offenbart, in der ein Strömungsfühler angeordnet ist und die muldenförmige Gaseinlässe enthält.

Wegen des hohen elektrischen Widerstands des Silizium-Heizfadens wird im Vergleich zu Heizfäden aus Metall (üblicherweise Gold oder Platin) eine höhere Detektionsempfindlichkeit des Wärmeleitfähigkeitsdetektors erreicht. Dies bedingt aber auch einen höheren Spannungsabfall über dem Heizwiderstand, wenn dieser mit einer bestimmten Heizleistung auf eine gewünschte Temperatur aufgeheizt wird, so dass ggf. ein eigensicherer Betrieb in explosionsgefährdeten Bereichen nicht möglich ist. In der EP 3 096 137 A1 wird daher vorgeschlagen, den Silizium-Heizfaden in zwei oder mehr Abschnitte aufzuteilen, die in der Strömung des Fluids physikalisch in Reihe angeordnet sind und elektrisch parallel geschaltet sind.

Der Erfindung liegt daher die Aufgabe zugrunde, einen thermoresistiven Gassensor anzugeben, der gleichermaßen als Strömungsfühler oder Wärmeleitfähigkeitsdetektor verwendbar ist, sich durch eine hohe Messempfindlichkeit und mechanische Stabilität auszeichnet und einfach und kostengünstig herstellbar ist.

Gemäß der Erfindung wird die Aufgabe durch den in Anspruch 1 angegebenen thermoresistiven Gassensor gelöst.

Vorteilhafte Weiterbildungen des erfindungsgemäßen thermoresistiven Gassensors, ein mindestens zwei solcher Gassensoren enthaltender Strömungssensor sowie ein Wärmeleitfähigkeitsdetektor auf der Basis des erfindungsgemäßen Gassensors sind den weiteren Ansprüchen zu entnehmen.

Gegenstand der Erfindung ist somit ein thermoresistiver Gassensor mit einem von dem Gas durchströmbaren flachen Gitter mit Gitterstegen, die aus einem Halbleitermaterial mit einer vorgegebenen Leitfähigkeitsart bestehen und in der Gitterebene parallel nebeneinander angeordnet sind, wobei die Gitterstege in der Gitterebene s-förmig verlaufend ausgebildet und elektrisch parallel geschaltet sind.

Bei dem erfindungsgemäßen Gassensor ist das Gitter nicht mäanderförmig ausgebildet, sondern besteht aus sowohl physikalisch als auch elektrisch parallelen Stegen. Die Gitterstege bilden mit ihrem Halbleitermaterial temperaturabhängige Widerstände, die im Vergleich zu Metall hochohmig sind und daher, wie oben bereits erwähnt, eine hohe Detektionsempfindlichkeit des Sensors ermöglichen. Da aber die Stege bzw. die von ihnen gebildeten Widerstände parallel geschaltet sind, ist der Gesamtwiderstand des Gitters und damit die bei einer vorgegebenen Heizleistung über dem Gitter abfallende elektrisehe Spannung gering, was einen eigensicheren Betrieb des Gassensors in explosionsgefährdeten Bereichen ermöglicht.

Als im Vergleich zu Metall hochohmiges Material für die Halbleiterschicht kommt insbesondere dotiertes Halbleitermaterial in Betracht, so z. B. Silizium, das sich auch durch seine Inertheit gegenüber chemisch aggressiven Gasgemischen auszeichnet. In Abhängigkeit von der Dotierung kann ein positiver Temperaturkoeffizient (PTC) oder negativer Temperaturkoeffizient (NTC) realisiert werden. Durch die Verwendung von monokristallinem Halbleitermaterial wird eine gute mechanische Stabilität erreicht, wozu auch die Richtungsabhängigkeit des Elastizitätsmoduls und des piezoresistiven Koeffizienten genutzt werden kann.

Zwar weisen auch die mäanderförmigen Gitter der eingangs erwähnten bekannten Gassensoren parallele Gitterabschnitte auf, jedoch sind diese elektrisch in Reihe geschaltet.

Aufgrund ihrer s-förmigen Ausbildung sind bei dem erfindungsgemäßen Gassensor die Gitterstege nicht mechanisch überbestimmt eingespannt, so dass sie bei Erwärmung und Ausdehnung nicht unkontrolliert ausgelenkt werden oder sogar knicken. Stattdessen bleibt der Abstand zwischen den Stegen erhalten, und sie können sich nicht berühren.

Grundsätzlich kann das Gitter auf unterschiedliche Weise, beispielsweise durch Ätzen, Laserschneiden oder 3D-Druck, erzeugt werden. Vorzugsweise ist das Halbleitermaterial in Form einer Halbleiterschicht auf einem plattenförmigen Halbleitersubstrat, ggf. unter Zwischenlage einer Isolierschicht, ausgebildet. Das Halbleitersubstrat enthält eine fensterartige Aussparung, über die sich die Halbleiterschicht erstreckt und dort in Form des Gitters ausgebildet ist, so dass die Gitterstege an ihren Enden mit der Halbleiterschicht auf dem Halbleitersubstrat verbunden und über diese elektrisch parallel geschaltet sind. Der Widerstand der die Stege verbindenden Halbleiterschicht ist allein aufgrund der Flächenausdehnung der Halbleiterschicht geringer als der der Stege. Dabei ist das Halbleitermaterial der Halbleiterschicht auf dem Halbleitersubstrat, also außerhalb des Gitters, in Bereichen, die sich mindestens über die Breite des Gitters erstrecken, vorzugsweise bis zur Entartung dotiert und damit fast so gut elektrisch leitend wie Metalle. Alternativ oder ergänzend kann die Halbleiterschicht dort eine Metallisierung tragen. Damit die Enden des Gitters bzw. der Gitterstege nicht von der Halbleiterschicht auf dem Halbleitersubstrat um die fensterartige Aussparung herum kurzgeschlossen werden, enthält die Halbleiterschicht eine Trennstruktur, in der das Halbleitermaterial vorzugsweise entfernt oder nicht dotiert ist.

Zum Zwecke der Parallelschaltung der Stege des Gitters kann die Halbleiterschicht zusätzlich außerhalb der fensterartigen Aussparung in den Bereichen der beiden Enden des Gitters jeweils eine Metallisierung tragen, die sich mindestens über die Breite des Gitters erstreckt. Die Metallisierungen können mit separat ausgebildeten Kontaktflächen zur Kontaktierung des Gassensors verbunden sein oder selbst die Kontaktflächen bilden.

Der erfindungsgemäße Gassensor findet in vorteilhafter Weise in einem Strömungssensor Verwendung, wo er zusammen mit mindestens einem weiteren baugleichen Gassensor derart in einer zu messenden Gasströmung angeordnet ist, dass die Gitter hintereinander und senkrecht zur Strömungsrichtung liegen.

In diesem Zusammenhang kann es von Vorteil sein, wenn sich die beiden oben erwähnten Metallisierungen in einer Richtung um ein vorgegebenes Maß über die Breite des Gitters hinaus erstrecken, um dort Kontaktflächen zu bilden, und wenn das Halbleitersubstrat (mitsamt der darauf liegenden Halbleiterschicht und ggf. Isolierschicht) in der anderen Richtung spiegelsymmetrisch zu den Kontaktflächen angeordnete durchgehende Öffnungen enthält. Dies ermöglicht es, die beiden Gassensoren um 180° zueinander versetzt aufeinander zu montieren, wobei die Kontaktflächen des unteren Gassensors durch die Öffnungen des darauf liegenden Gassensors hindurch zugänglich sind und somit beide Gassensoren von einer Seite, der Oberseite, her kontaktiert werden können.

Der erfindungsgemäße Gassensor findet weiterhin in vorteilhafter Weise als Heizelement in einem Wärmeleitfähigkeitsdetektor Verwendung, wo er vorzugsweise zwischen zwei Bauteilen gehalten ist, die jeweils eine zu dem Gitter hin offene und mit der fensterartigen Aussparung in dem Halbleitersubstrat fluchtende Mulde enthält. Die beiden Mulden bilden einen Messraum, in dem das Heizelement bzw. Gitter von einem Messgas umströmt wird, welches über Gasanschlüsse in den Messraum eingeleitet und aus diesem herausgeleitet wird. Die beiden üblicherweise röhrchenfömigen Gasanschlüsse erweitern sich in Richtung zu dem Messraum hin auf die Breite des Gitters, so dass das Messgas über die gesamte Fläche des Gitters strömt. Jeder der beiden Bauteile kann jeweils einen der beiden Gasanschlüsse enthalten. Zur Vereinfachung des konstruktiven Aufbaus des Wärmeleitfähigkeitsdetektors und seiner Verwendung befinden sich vorzugsweise beide Gasanschlüsse in einem der beiden Bauteile.

Damit im letztgenannten Falle, in dem die zwei Gasanschlüsse in eine der beiden Mulden münden, das Messgas nicht nur an den Stegen des Gitters entlang streift, sondern diese vollständig umströmt, ist vorzugsweise vorgesehen, dass der Boden dieser Mulde in Längsrichtung des Gitters konvex gekrümmt ist, so dass der Abstand zwischen dem Gitter und dem Boden dieser Mulde im Bereich der Längsrichtungsmitte des Gitters geringer als in den Bereichen der beiden Enden des Gitters ist. Zusätzlich kann der Boden der anderen der beiden Mulden in Längsrichtung des Gitters entsprechend konkav gekrümmt sein, so dass der Abstand zwischen den Böden der beiden Mulden weitgehend gleich bleibt und keine Erweiterung oder Verengung des Messraums in Richtung der Strömung des Messgases stattfindet.

Trotz der Auffächerung des Messgasstroms beim Einlass in den Messraum können sich noch unterschiedliche Strömungsgeschwindigkeiten über den Querschnitt des Messraumes bzw. über die Breite des Gitters ergeben. Weiterhin heizen sich die Gitterstege in der Mitte des Gitters stärker auf, als die äußeren Stege. Das letztgenannte Problem kann dadurch kompensiert werden, dass die Stege über die Breite des Gitters variierende Querschnittsflächen aufweisen, so dass der Widerstand der äußeren Stege geringer ist, als der der inneren Stege. Ergänzend oder alternativ kann zur Homogenisierung der Temperatur und Strömungsgeschwindigkeit im Bereich der Gitterstege vorgesehen werden, dass der Boden der Mulde mit den beiden Gasanschlüssen in Querrichtung des Gitters konvex gekrümmt ist, so dass der Abstand zwischen dem Gitter und dem Boden dieser Mulde im Bereich der Querrichtungsmitte des Gitters geringer als in den Randbereichen des Gitters ist und/oder dass der Boden der anderen Mulde in Längsrichtung des Gitters konkav gekrümmt ist, so dass der Abstand zwischen dem Gitter und dem Boden dieser Mulde im Bereich der Querrichtungsmitte des Gitters größer als in den Randbereichen des Gitters ist.

Der erfindungsgemäße thermoresistive Gassensor ist gleichermaßen für den Einsatz in einem Strömungssensor, beispielsweise in einem nichtdispersiven Infrarot-(NDIR)-Analysengerät oder einem nach dem paramagnetischen Wechseldruckverfahren arbeitenden Gasanalysator, und in einem Wärmeleitfähigkeitsdetektor für die Gaschromatographie oder zur Analyse binärer Gasgemische geeignet. Die elektrische Verschaltung des Gassensors, z. B. in einer Brückenschaltung, ist an sich bekannt und nicht Gegenstand der Erfindung.

Zur weiteren Erläuterung der Erfindung wird im Folgenden auf die Figuren der Zeichnung Bezug genommen; im Einzelnen zeigen:
- FIG. 1: ein Ausführungsbeispiel des erfindungsgemäßen Gassensors mit einem von dem Gas durchströmbaren Gitter in Draufsicht,
- FIG. 2: einen Längsschnitt durch den Gassensor nach FIG. 1,
- FIG. 3: ein zweites Ausführungsbeispiel des erfindungsgemäßen Gassensors in Draufsicht,
- FIG. 4: ein Ausführungsbeispiel für einen Gittersteg,
- FIG. 5: ein Ausführungsbeispiel eines Strömungssensors mit zwei Gassensoren in perspektivischer Explosionsdarstellung,
- FIG. 6 und 7: ein Ausführungsbeispiel eines Wärmeleitfähigkeitsdetektors mit einem Gassensor in einem Schnitt in Längsrichtung und in Querrichtung zu dem Gitter,
- FIG. 8 und 9: einen perspektivischen Längsschnitt des Wärmeleitfähigkeitsdetektors nach FIG. 6 und 7 in Gesamtdarstellung und als Detailansicht,
- FIG. 10: einen perspektivischen Querschnitt durch einen Messraum des Wärmeleitfähigkeitsdetektors,
- FIG. 11: einen perspektivischen Längsschnitt eines zweiten Ausführungsbeispiels des Wärmeleitfähigkeitsdetektors und
- FIG. 12: ein drittes Ausführungsbeispiel des Wärmeleitfähigkeitsdetektors in perspektivischer Ansicht.

Die Darstellungen in den Figuren sind schematisch und nicht maßstäblich, können aber qualitative Größenverhältnisse anzeigen.

Gleiche oder ähnliche Komponenten in unterschiedlichen Figuren sind mit gleichen Bezugsziffern versehen.

Die Erfindung beschränkt sich in ihren Ausführungen nicht auf die in den Figuren dargestellten, bevorzugten Ausführungsformen. Vielmehr ist eine Vielzahl von Varianten denkbar, welche in der dargestellten Lösung von dem Grundgedanken der Erfindung auch bei grundsätzlich anders gearteten Ausführungsformen Gebrauch machen.

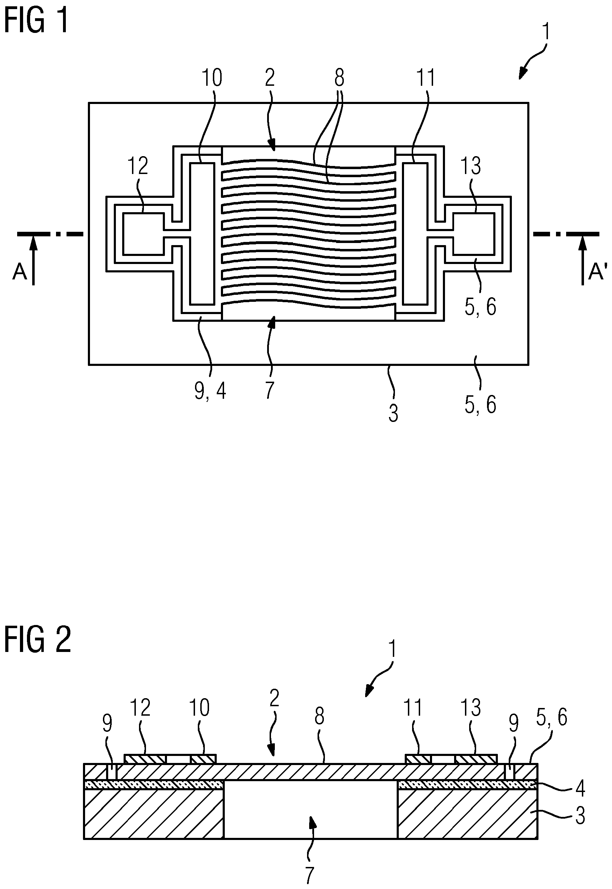

FIG. 1 zeigt ein Ausführungsbeispiel des erfindungsgemäßen Gassensors 1 mit einem von einem Gas durchströmbaren flachen Gitter 2 in Draufsicht.

FIG. 2 zeigt denselben Gassensor 1 in einem Längsschnitt entlang der Linie AA'.

Der Gassensor 1 weist ein plattenförmiges Halbleitersubstrat 3 beispielsweise aus Silizium auf, auf dem unter Zwischenlage einer Isolierschicht 4 aus, z. B., Siliziumdioxid ein Halbleitermaterial 5 in Form einer Halbleiterschicht 6 aufgebracht ist. Das Halbleitermaterial 5 weist eine z. B. durch Dotierung vorgegebene Leitfähigkeitsart auf, wobei es im Vergleich zu Metall hochohmig leitend ist. Das Halbleitersubstrat 3 und die darüber liegende Isolierschicht 4 enthalten eine fensterartige Aussparung 7, über die sich die Halbleiterschicht 6 erstreckt und dort unter Bildung des Gitters 2 strukturiert ist. Das Gitter 2 besteht aus einer Vielzahl von Gitterstegen 8, die in der Gitterebene parallel nebeneinander liegen und s-förmig verlaufend ausgebildet sind. Die fensterartige Aussparung 7 und das Gitter 2 können durch einen Ätzprozess erzeugt werden. Die Gitterstege 8 bilden hochohmige Widerstände, deren Widerstandswerte durch die Länge und die Querschnittsfläche der Gitterstege 8 festgelegt ist. Die Stege 8 sind an ihren beiden Enden jeweils über die Halbleiterschicht 6 auf dem Halbleitersubstrat 3 außerhalb der fensterartigen Aussparung 7 elektrisch parallel geschaltet. Damit die Gitterstege 8 nicht von der Halbleiterschicht 6 um die fensterartige Aussparung 7 herum kurzgeschlossen werden, enthält die Halbleiterschicht 6 eine Trennstruktur 9, in der das Halbleitermaterial 5 bis auf die Isolierschicht 4 hinunter entfernt ist. Zur Verbesserung der elektrischen Parallelschaltung der Gitterstege 8 ist die Halbleiterschicht 6 in den Bereichen der beiden Enden des Gitters 2 außerhalb der fensterartigen Aussparung 7 mindestens über die Breite des Gitters 2 bis zur Entartung dotiert und trägt dort jeweils eine Metallisierung 10, 11. Die Metallisierungen 10, 11 können mit separat ausgebildeten Kontaktflächen 12, 13 zur Kontaktierung des Gassensors 1 verbunden sein oder selbst die Kontaktflächen bilden.

Wie bereits erwähnt, bilden die aus dem Halbleitermaterial 5 bestehenden Gitterstege 8 temperaturabhängige Widerstände, die im Vergleich zu Metall hochohmig sind und daher eine hohe Detektionsempfindlichkeit des Gassensors 1 ermöglichen. Da die Gitterstege 8 elektrisch parallel geschaltet sind, ist der Gesamtwiderstand des Gitters 2 und damit die bei einer vorgegebenen Heizleistung über dem Gitter 2 abfallende elektrische Spannung gering, was einen eigensicheren Betrieb des Gassensors 1 in explosionsgefährdeten Bereichen ermöglich.

Um eine gleichmäßige Temperaturverteilung über die Breite des Gitters 2 zu erhalten und zu vermeiden, dass sich die in der Mitte des Gitters 2 befindenden Gitterstege 8 stärker aufheizen als die am Rand des Gitters 2, können die äußeren Gitterstege 8 mit einer größeren Querschnittsfläche (Breite) als die der inneren Gitterstege 8 ausgebildet werden.

Der Querschnitt der Gitterstege 8 liegt vorzugsweise im Bereich von 1 µm x 1 µm bis 100 µm x 100 µm und kann beispielsweise 10 µm x 10 µm betragen. Bei einer Größe der fensterartigen Aussparung 7 von 1 mm x 1 mm kann das Gitter 2 dann bis zu 50 Stege aufweisen.

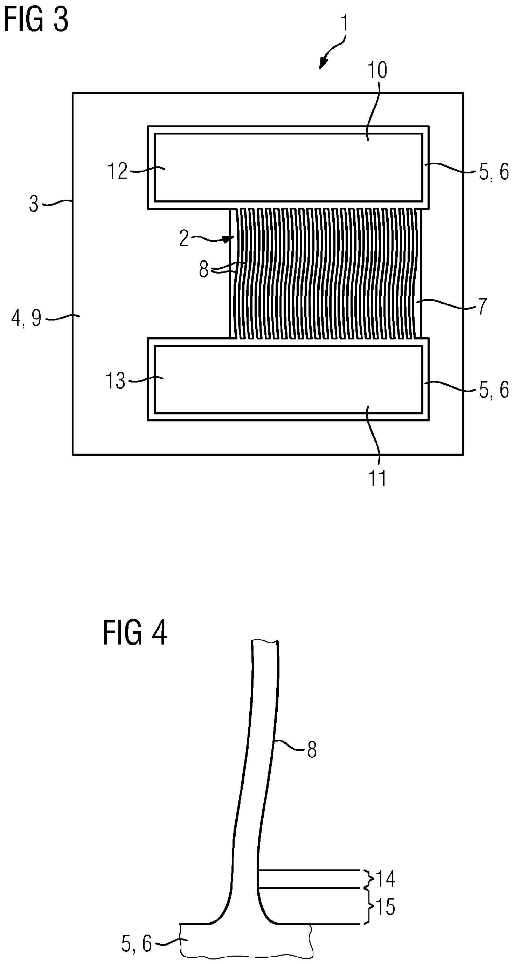

FIG. 3 zeigt ein weiteres Ausführungsbeispiel für den erfindungsgemäßen Gassensor 1' in Draufsicht. Die Halbleiterschicht 6 auf dem Halbleitersubstrat 3 ist auf zwei rechteckförmige Inselbereiche beiderseits der fensterartigen Aussparung 7 reduziert, zwischen denen die parallelen s-förmigen Stege 8 des Gitters 2 über die fensterartige Aussparung 7 hinüber verlaufen. Außerhalb der Rechteckinseln ist das Halbleitermaterial 5 von dem Halbleitersubstrat 3 bzw. der darauf liegenden Isolierschicht 4 entfernt (Trennstruktur 9). Die Rechteckinseln aus dem Halbleitermaterial 5 sind nahezu vollflächig mit den Metallisierungen 10 und 11 versehen und erstrecken über die Breite des Gitters 2 hinaus, um dort die Kontaktflächen 12, 13 zu bilden.

FIG. 4 zeigt beispielhaft anhand eines einzelnen Stegs 8 ein Ausführungsbeispiel für die Verbindung der Gitterstege 8 mit der Halbleiterschicht 6 auf dem Halbleitersubstrat. Damit die Stege 8 bei ihrer Erwärmung nicht abbrechen, ist vorgesehen, dass die Stege 8 sich nach einem ersten senkrecht auf die Halbleiterschicht 6 zulaufenden Abschnitt 14 in einem zweiten Abschnitt 15 tangential erweitern um unter einen Winkel von beispielsweise etwa 45° in die Halbleiterschicht 6 überzugehen.

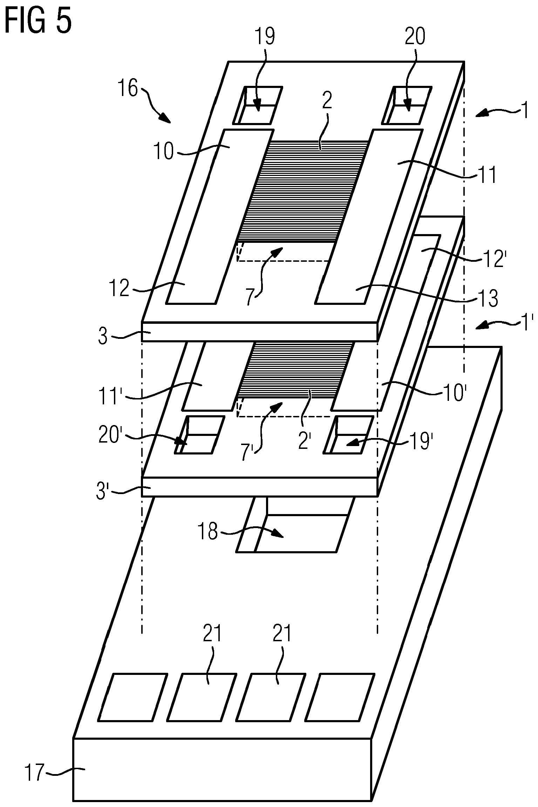

FIG. 5 zeigt in perspektivischer Explosionsdarstellung einen Strömungssensor 16, bei dem ein Plattenverbund aus zwei aufeinanderliegenden baugleichen Gassensoren 1, 1' auf einer Grundplatte 17 montiert ist, die einen mit den fensterartigen Aussparungen 7, 7' der Gassensoren 1, 1' fluchtenden Durchbruch 18 aufweist. Die Gitter 2, 2' der Gassensoren 1, 1' liegen parallel zueinander in einem Abstand, der durch die Dicke des Halbleitersubstrats 3 gegeben ist. Zwischen den aufeinanderliegenden Platten 1, 1', 17 können Flächendichtungen o. dgl. vorgesehen werden.

Wie in dem Beispiel nach FIG. 3 erstrecken sich bei den Gassensoren 1, 1' jeweils die beiden Metallisierungen 10, 11, 10', 11' in einer Richtung um ein vorgegebenes Maß über die Breite des Gitters 2, 2' hinaus, um dort die Kontaktflächen 12, 13, 12', 13' zu bilden. Zusätzlich enthalten die Halbleitersubstrate 3, 3' in der anderen Richtung spiegelsymmetrisch zu den Kontaktflächen 12, 13, 12', 13' angeordnete durchgehende Öffnungen 19, 20, 19', 20'. Die Gassensoren 1, 1' sind um 180° zueinander versetzt, so dass die Kontaktflächen 12', 13' des unteren Gassensors 1' durch die Öffnungen 20, 19 des darauf liegenden Gassensors 1 hindurch zugänglich sind, so dass der Strömungssensor 16 von einer Seite her kontaktiert werden kann. Die Kontaktflächen 12, 13, 12', 13' der Gassensoren 1, 1' sind über hier nicht gezeigte Leitungen mit Anschlusspads 21 auf der Grundplatte 17 verbunden.

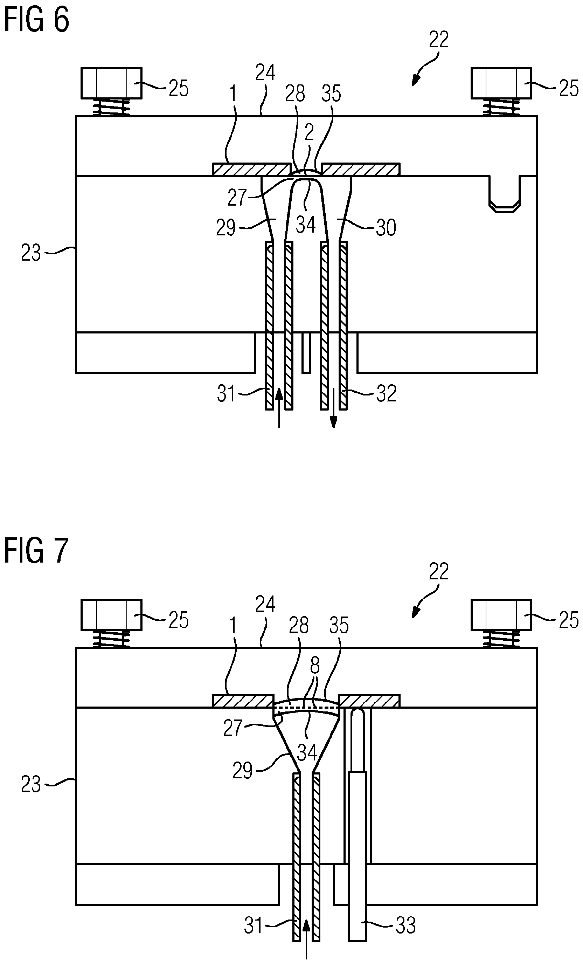

FIG. 6 und FIG. 7 zeigen ein Ausführungsbeispiel eines Wärmeleitfähigkeitsdetektors 22 mit einem von dem Gassensor 1 gebildeten Heizelement einmal in einem Schnitt längs zu dem Gitter 2 bzw. den Gitterstegen 8 und einmal in einem Schnitt quer zu dem Gitter 2 bzw. den Gitterstegen 8.

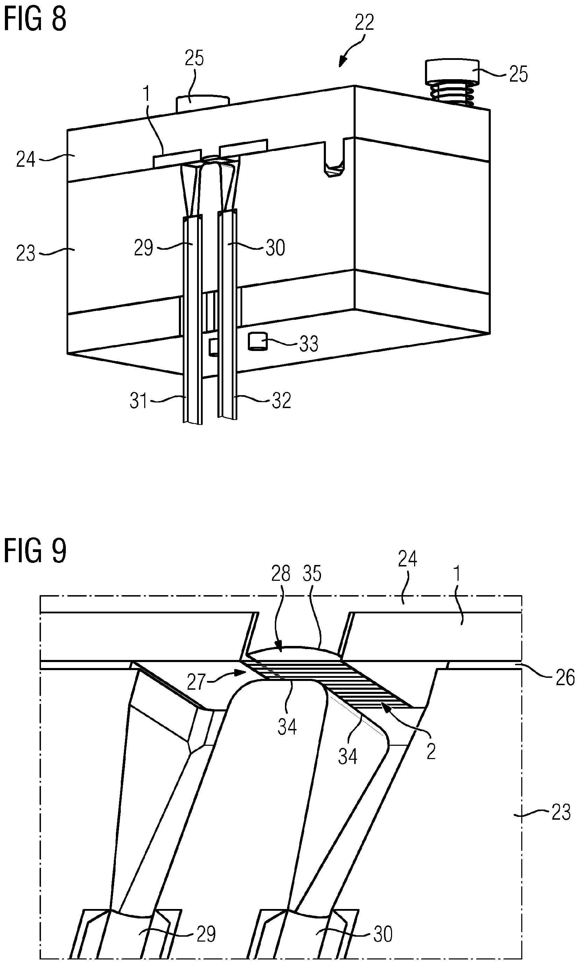

FIG. 8 und 9 zeigen denselben Wärmeleitfähigkeitsdetektor 22 in einem perspektivischen Längsschnitt einmal als Gesamtdarstellung und einmal als Detailansicht.

Der Gassensor 1 ist zwischen zwei Bauteilen, hier einem blockförmigen Grundkörper 23 (z. B. aus Aluminium), und einem Deckel 24 (z. B. aus Aluminium oder Polyetheretherketon (PEEK)), in einer Aussparung des Deckels 24 und mit dem Gitter 2 zu dem Grundkörper 23 hin liegend angeordnet. Die Bauteile 23, 24 sind mittels Schrauben 25 und unter Zwischenlage einer Flächendichtung oder Dichtungsfolie 26 (FIG. 9) miteinander verbunden. Sowohl der Grundkörper 23 als auch der Deckel 24 enthalten jeweils eine zu dem Gitter 2 hin offene und mit der fensterartigen Aussparung 7 des Gassensors 1 fluchtende Mulde 27, 28. Die beiden Mulden 27, 28 bilden einen Messraum, in dem das Gitter 2 von einem Messgas umströmt wird, welches über zwei Gasanschlüsse 29, 30 in den Messraum eingeleitet und aus diesem herausgeleitet wird. Grundsätzlich kann jeder der beiden Bauteile 23, 24 jeweils einen der beiden Gasanschlüsse 29, 30 enthalten. Zur Vereinfachung des konstruktiven Aufbaus des Wärmeleitfähigkeitsdetektors 22 und seiner Verwendung befinden sich bei dem gezeigten Beispiel beide Gasanschlüsse 29, 30 in dem Grundkörper 23 und münden in den Bereichen der beiden Enden des Gitters 2 in die Mulde 27. Die Gasanschlüsse 29, 30 sind beispielsweise durch Fräs- oder Laserbearbeitung in Form von Kanälen in dem Grundkörper 23 ausgebildet, in die Kanülen 31, 32 eingesetzt sind. Die Kontaktierung des Gassensors 1 erfolgt ebenfalls auf der Seite des Grundkörpers 23 durch Federkontaktstifte 33.

Wie insbesondere FIG. 7 und 9 zeigen, erweitern sich die zunächst röhrchenförmigen Gasanschlüsse 29, 30 in Richtung zu der Mulde 27 hin auf die Breite des Gitters 2, so dass eine Laminare Aufspreizung oder Auffächerung des Messgases erfolgt und das Messgas über die gesamte Fläche des Gitters 2 strömt.

Damit das Messgas nicht nur an den Stegen 8 des Gitters 2 entlang streift, sondern diese vollständig umströmt, ist der Boden 34 der Mulde 27 in Längsrichtung des Gitters 2 bzw. der Gitterstege 8 konvex gekrümmt, so dass der Abstand zwischen dem Gitter 2 und dem Boden 34 dieser Mulde 27 im Bereich der Längsrichtungsmitte des Gitters 2 geringer als in den Bereichen der beiden Enden des Gitters 2 ist. Zusätzlich ist der Boden 35 der anderen Mulde 28 in dem Deckel 24 in Längsrichtung des Gitters 2 entsprechend konkav gekrümmt, so dass der Abstand zwischen den Böden 34, 35 der beiden Mulden 27, 28 weitgehend gleich bleibt und keine Erweiterung oder Verengung des Messraums in Richtung der Strömung des Messgases stattfindet.

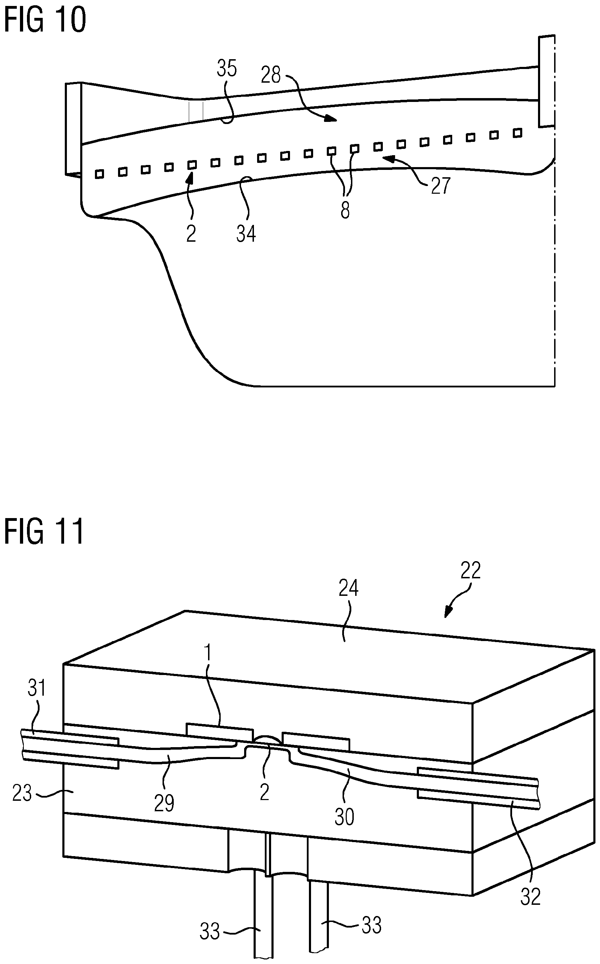

FIG. 10 zeigt einen perspektivischen Querschnitt durch den von den Mulden 27, 28 gebildeten Messraum des Wärmeleitfähigkeitsdetektors 22.

Wie insbesondere in FIG. 7, 9 und 10 zu sehen ist, ist der Boden 34 der Mulde 27, in die die beiden Gasanschlüsse 29, 30 münden, zusätzlich in Querrichtung des Gitters 2 konvex gekrümmt, so dass der Abstand zwischen dem Gitter 2 und dem Boden 34 dieser Mulde 27 im Bereich der mittleren Gitterstege 8 geringer als in den Bereichen der äußeren Gitterstege 8 ist. Dadurch wird eine Homogenisierung der Temperaturverteilung des Gitters 2 und der Strömungsgeschwindigkeit des Messgases im Bereich der Gitterstege 8 erreicht. Zusätzlich ist der Boden 35 der anderen Mulde 28 in dem Deckel 24 in Querrichtung des Gitters 2 konkav gekrümmt, so dass der Abstand zwischen den Böden 34, 35 der beiden Mulden 27, 28 weitgehend gleich bleibt und keine Erweiterung oder Verengung des Messraums quer zur Richtung der Strömung des Messgases stattfindet.

FIG. 11 zeigt eine alternative Ausführungsform des Wärmeleitfähigkeitsdetektors 22, bei der die Gaszu- und -abfuhr über die Gasanschlüsse 29, 30 seitlich erfolgt.

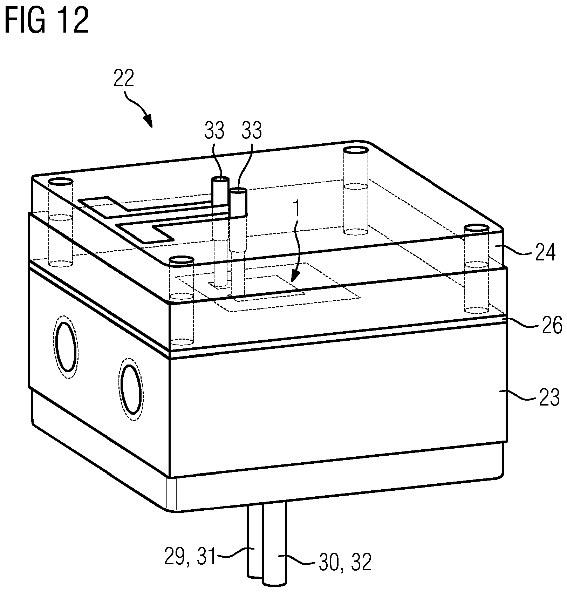

FIG. 12 zeigt eine weitere alternative Ausführungsform des Wärmeleitfähigkeitsdetektors 22, bei der die Gasanschlüsse 29, 30 in dem Grundkörper 23 liegen und die Kontaktierung des Gassensors 1 in dem Deckel 24 erfolgt. Elektrik und Gaszuführung sind somit baulich voneinander getrennt, was Vorteile hinsichtlich der Herstellbarkeit und Dichtheit des Wärmeleitfähigkeitsdetektors 22 hat.

## Patentansprüche

1. Thermoresistiver Gassensor (1) mit einem von dem Gas durchströmbaren flachen Gitter (2) mit Gitterstegen (8), die aus einem Halbleitermaterial (5) mit einer vorgegebenen Leitfähigkeitsart bestehen und in der Gitterebene parallel nebeneinander angeordnet sind, wobei die Gitterstege (8) in der Gitterebene s-förmig verlaufend ausgebildet und elektrisch parallel geschaltet sind.

2. Thermoresistiver Gassensor (1) nach Anspruch 1, **dadurch gekennzeichnet, dass** die Stege (8) über die Breite des Gitters (2) variierende Querschnittsflächen aufweisen.

3. Thermoresistiver Gassensor (1) nach Anspruch 1 oder 2, **dadurch gekennzeichnet, dass** das Halbleitermaterial (5) in Form einer Halbleiterschicht (6) auf einem plattenförmigen Halbleitersubstrat (3) ausgebildet ist, die sich über eine fensterartige Aussparung (7) in dem Halbleitersubstrat (3) erstreckt und dort in Form des Gitters (2) ausgebildet ist, und dass die Halbleiterschicht (6) außerhalb der fensterartigen Aussparung (7) eine die beiden Enden des Gitters (2) voneinander isolierende Trennstruktur (9) enthält, in der das Halbleitermaterial (5) der Halbleiterschicht (6) entfernt oder intrinsisch ist.

4. Thermoresistiver Gassensor (1) nach Anspruch 3, **dadurch gekennzeichnet, dass** zwischen dem Halbleitersubstrat (3) und der Halbleiterschicht (6) eine Isolierschicht (4) ausgebildet ist.

5. Thermoresistiver Gassensor (1) nach Anspruch 3 oder 4, **dadurch gekennzeichnet, dass** die Halbleiterschicht (6) in außerhalb der fensterartigen Aussparung (7) den beiden Enden des Gitters (2) gegenüberliegenden und sich mindestens über die Breite des Gitters (2) erstreckenden Bereichen jeweils bis zur Entartung dotiert ist und/oder dort eine Metallisierung (10, 11) trägt.

6. Thermoresistiver Gassensor (1) nach Anspruch 5, **dadurch gekennzeichnet, dass** sich die beiden Metallisierungen (10, 11) in einer Richtung um ein vorgegebenes Maß über die Breite des Gitters (2) hinaus erstrecken, um dort Kontaktflächen (12, 13) zu bilden, und dass das Halbleitersubstrat (3) in der anderen Richtung spiegelsymmetrisch zu den Kontaktflächen (12, 13) angeordnete durchgehende Öffnungen (19, 20) enthält.

7. Strömungssensor (18) mit mindestens zwei in einer zu messenden Gasströmung hintereinander und mit ihren Gittern (2) senkrecht zur Strömungsrichtung angeordneten baugleichen thermoresistiven Gassensoren (1, 1') gemäß einem der Ansprüche 1 bis 5.

8. Strömungssensor (18) mit mindestens zwei in einer zu messenden Gasströmung hintereinander und mit ihren Gittern (2, 2') senkrecht zur Strömungsrichtung angeordneten baugleichen thermoresistiven Gassensoren (1, 1') gemäß Anspruch 6, **dadurch gekennzeichnet, dass** die beiden Gassensoren (1, 1') um 180° zueinander versetzt sind, so dass die Kontaktflächen (12', 13') des unteren Gassensors (1') durch die Öffnungen (20, 19) des darauf liegenden Gassensors (1) hindurch zugänglich sind.

9. Wärmeleitfähigkeitsdetektor (22) mit einem thermoresistiven Gassensor (1) gemäß einem der Ansprüche 3 bis 6, **dadurch gekennzeichnet, dass** der Gassensor (1) zwischen zwei Bauteilen (23, 24) gehalten ist, die jeweils eine zu dem Gitter (2) hin offene und mit der fensterartigen Aussparung (7) in dem Halbleitersubstrat (3) fluchtende Mulde (27, 28) enthält, wobei jede der beiden Mulden (27, 28) jeweils einen Gasanschluss oder eine der beiden Mulden (27, 28) zwei Gasanschlüsse (29, 30) in den Bereichen der beiden Enden des Gitters (2) aufweist und die Gasanschlüsse (29, 30) sich in Richtung zu der jeweiligen Mulde (27, 28) hin auf die Breite des Gitters (2) erweitern.

10. Wärmeleitfähigkeitsdetektor (22) nach Anspruch 9, bei dem die eine der beiden Mulden (27, 28) die zwei Gasanschlüsse (29, 30) aufweist, **dadurch gekennzeichnet, dass** der Boden (34) dieser Mulde (27) in Längsrichtung des Gitters (2) konvex gekrümmt ist, so dass der Abstand zwischen dem Gitter (2) und dem Boden (34) dieser Mulde (27) im Bereich der Längsrichtungsmitte des Gitters (2) geringer als in den Bereichen der beiden Enden des Gitters (2) ist.

11. Wärmeleitfähigkeitsdetektor (22) nach Anspruch 9 oder 10, **dadurch gekennzeichnet, dass** der Boden (35) der anderen der beiden Mulden (27, 28) in Längsrichtung des Gitters (2) konkav gekrümmt ist, so dass der Abstand zwischen dem Gitter (2) und dem Boden (35) dieser Mulde (28) im Bereich der Längsrichtungsmitte des Gitters (2) größer als in den Bereichen der beiden Enden des Gitters (2) ist.

12. Wärmeleitfähigkeitsdetektor (22) nach einem der Ansprüche 9 bis 11, bei dem die eine der beiden Mulden (27, 28) die zwei Gasanschlüsse (29, 30) aufweist, **dadurch gekennzeichnet, dass** der Boden (34) dieser Mulde (27) in Querrichtung des Gitters (2) konvex gekrümmt ist, so dass der Abstand zwischen dem Gitter (2) und dem Boden (34) dieser Mulde (27) im Bereich der Querrichtungsmitte des Gitters (2) geringer als in den Randbereichen des Gitters (2) ist.

13. Wärmeleitfähigkeitsdetektor (22) nach Anspruch 12, **dadurch gekennzeichnet, dass** der Boden (35) der anderen der beiden Mulden (27, 28) in Längsrichtung des Gitters (2) konkav gekrümmt ist, so dass der Abstand zwischen dem Gitter (2) und dem Boden (35) dieser Mulde (28) im Bereich der Querrichtungsmitte des Gitters (2) größer als in Randbereichen des Gitters (2) ist.

## Claims

1. Thermoresistive gas sensor (1) with a flat lattice (2) through which a gas can flow, with lattice webs (8), which consist of a semiconductor material (5) with a predetermined type of conductivity and are arranged in the plane of the lattice in parallel next to one another, wherein the lattice webs (8) are embodied running in an s shape in the plane of the lattice and are connected electrically in parallel.

2. Thermoresistive gas sensor (1) according to claim 1, **characterised in that** the webs (8) have cross-sectional surfaces varying over the width of the lattice (2).

3. Thermoresistive gas sensor (1) according to claim 1 or 2, **characterised in that** the semiconductor material (5) is embodied in the form of a semiconductor layer (6) on a plate-type semiconductor substrate (3), which extends over a window-like cutout (7) in the semiconductor substrate (3) and is embodied there in the form of the lattice (2), and that the semiconductor layer (6) outside the window-like cutout (7) contains a separation structure (9) separating the two ends of the lattice (2) from one another, in which the semiconductor material (5) of the semiconductor layer (6) is removed or is intrinsic.

4. Thermoresistive gas sensor (1) according to claim 3, **characterised in that** an insulating layer (4) is embodied between the semiconductor substrate (3) and the semiconductor layer (6).

5. Thermoresistive gas sensor (1) according to claim 3 or 4, **characterised in that** the semiconductor layer (6), in areas outside the window-like cutout (7) lying opposite the two ends of the lattice (2) and extending at least over the width of the lattice (2), is doped until it degenerates in each case and/or bears a metallisation (10, 11) there.

6. Thermoresistive gas sensor (1) according to claim 5, **characterised in that** the two metallisations (10, 11) extend in one direction by a predetermined amount beyond the width of the lattice (2), in order to form the contact surfaces (12, 13), and that the semiconductor substrate (3) in the other direction contain through-openings (19, 20) arranged mirror-symmetrically to the contact surfaces (12, 13).

7. Flow sensor (18) with at least two thermoresistive gas sensors (1, 1') of the same design arranged behind one another in a gas flow to be measured and with their lattices (2) at right angles to the direction of flow according to one of claims 1 to 5.

8. Flow sensor (18) with at least two thermoresistive gas sensors (1, 1') of the same design arranged behind one another in a gas flow to be measured and with their lattices (2, 2') at right angles to the direction of flow in accordance with claim 6, **characterised in that** the two gas sensors (1, 1') are offset from one another by 180°, so that the contact surfaces (12', 13') of the lower gas sensor (1') are accessible through the openings (20, 19) of the gas sensor (1) lying thereon.

9. Thermal conductivity detector (22) with a thermoresistive gas sensor (1) according to one of claims 3 to 6, **characterised in that** the gas sensor (1) is held between two components (23, 24), which each contain a trough (27, 28) open towards the lattice (2) and flush with the window-like cutout (7) in the semiconductor substrate (3), wherein each of the two troughs (27, 28) have a gas connection in each case, or one of the two troughs (27, 28) has two gas connections (29, 30) in the areas of the two ends of the lattice (2) and the gas connections (29, 30) widen out in the direction towards the respective trough (27, 28) to the width of the lattice (2).

10. Thermal conductivity detector (22) according to claim 9, in which one of the two troughs (27, 28) has the two gas connections (29, 30), **characterised in that** the floor (34) of this trough (27) is curved in a convex shape in the longitudinal direction of the lattice (2), so that the distance between the lattice (2) and the floor (34) of this trough (27) in the area of the middle of the longitudinal direction of the lattice (2) is smaller than in the areas of the two ends of the lattice (2).

11. Thermal conductivity detector (22) according to claim 9 or 10, **characterised in that** the floor (35) of the other of the two troughs (27, 28) is curved in a concave shape in the longitudinal direction of the lattice (2), so that the distance between the lattice (2) and the floor (35) of this trough (28), in the area of the middle of the longitudinal direction of the lattice (2), is larger than in the areas of the two ends of the lattice (2).

12. Thermal conductivity detector (22) according to one of claims 9 to 11, in which the one of the two troughs (27, 28) has the two gas connections (29, 30), **characterised in that** the floor (34) of this trough (27) is curved in a convex shape in the transverse direction of the lattice (2), so that the distance between the lattice (2) and the floor (34) of this trough (27) in the area of the middle of the transverse direction of the lattice (2) is smaller than in the edge areas of the lattice (2).

13. Thermal conductivity detector (22) according to claim 12, **characterised in that** the floor (35) of the other of the two troughs (27, 28) is curved in a concave shape in the longitudinal direction of the lattice (2), so that the distance between the lattice (2) and the floor (35) of this trough (28) in the area of the middle of the transverse direction of the lattice (2) is greater than in the edge areas of the lattice (2).

## Revendications

1. Capteur (1) de gaz thermorésistif comprenant un réseau (2) plat pouvant être traversé par le gaz et ayant des parties (8) pleines, qui sont en un matériau (5) semi-conducteur et d'un type de conductivité donné à l'avance et sont disposées côte-à-côte parallèlement dans le plan du réseau, les parties (8) pleines du réseau étant constituées en s'étendant en forme de S dans le plan de réseau et étant montées en parallèle électriquement.

2. Capteur (1) de gaz thermorésistif suivant la revendication 1, **caractérisé en ce que** les parties (8) pleines ont des surfaces de section transversales, qui varient sur la largeur du réseau (2).

3. Capteur (1) de gaz thermorésistif suivant la revendication 1 ou 2, **caractérisé en ce que** le matériau (5) semi-conducteur est constitué sous la forme d'une couche (6) semi-conductrice sur un substrat (3) semi-conducteur en forme de plaque, qui s'étend sur un évidement (7) de type fenêtre, dans le substrat (3) semi-conducteur et qui y est constitué sous la forme du réseau (2) et **en ce que** la couche (6) semi-conductrice contient, à l'extérieur de l'évidement (7) de type fenêtre, une structure (9) de séparation isolant l'une de l'autre les deux extrémités du réseau (2), dans laquelle le matériau (5) semi-conducteur de la couche (6) semi-conductrice est éliminé ou est intrinsèque.

4. Capteur (1) de gaz thermorésistif suivant la revendication 3, **caractérisé en ce qu'**une couche (4) isolante est constituée entre le substrat (3) semi-conducteur et la couche (6) semi-conductrice.

5. Capteur (1) de gaz thermorésistif suivant la revendication 3 ou 4, **caractérisé en ce que** la couche (6) semi-conductrice est, dans les régions à l'extérieur de l'évidement (7) de type fenêtre opposées aux deux extrémités du réseau (2) et s'étendant au moins sur la largeur du réseau (2), dopée respectivement jusqu'à la dégénérescence et/ou y porte une métallisation (10, 11).

6. Capteur (1) de gaz thermorésistif suivant la revendication 5, **caractérisé en ce que** les deux métallisations (10, 11) s'étendent dans une direction dans une mesure donnée à l'avance, au-delà de la largeur du réseau (2), pour y former des surfaces (12, 13) de contact et **en ce que** le substrat (3) semi-conducteur comporte des ouvertures (19, 20) traversantes disposées, par rapport aux surfaces (12, 13) de contact, en étant symétriques comme dans un miroir dans l'autre direction.

7. Capteur (18) d'écoulement comprenant au moins deux capteurs (1, 1') de gaz thermorésistifs suivant l'une des revendications 1 à 5, de même construction, disposés l'un derrière l'autre dans un courant de gaz à mesurer et en ayant leurs réseaux (2) disposés perpendiculairement au sens d'écoulement.

8. Capteur (18) d'écoulement comprenant au moins deux capteurs (1, 1') de gaz thermorésistifs suivant la revendication 6, de même construction, disposés l'un derrière l'autre dans un courant de gaz à mesurer et en ayant leurs réseaux (2, 2') disposés perpendiculairement au sens d'écoulement, **caractérisé en ce que** les deux capteurs (1, 1') de gaz sont décalés de 180° l'un par rapport à l'autre, de manière à ce que les surfaces (12', 13') de contact du capteur (1, 1') de gaz inférieur soit accessible par les ouvertures (20, 19) du capteur (1) de gaz se trouvant dessus.

9. Détecteur (22) de conductibilité de la chaleur comprenant un capteur (1) de gaz thermorésistif suivant l'une des revendications 3 à 6, **caractérisé en ce que** le capteur (1) de gaz est maintenu entre deux pièces (23, 24) qui comportent chacune une cuvette (27, 28) ouverte vers le réseau (2) et à affleurement avec l'évidement (7) de type fenêtre dans le substrat (3) semi-conducteur, chacune des deux cuvettes (27, 28) ayant respectivement un raccord de gaz ou l'une des deux cuvettes (27, 28) ayant deux raccords (29, 30) de gaz dans les parties des deux extrémités du réseau (2) et les raccords (29, 30) de gaz s'élargissant en direction de la cuvette (27, 28) respective jusqu'à la largeur du réseau (2).

10. Détecteur (22) de conductibilité de la chaleur suivant la revendication 9, dans lequel l'une des deux cuvettes (27, 28) a les deux raccords (29, 30) de gaz, **caractérisé en ce que** le fond (34) de cette cuvette (27) est incurvé de manière convexe dans la direction longitudinale du réseau (2) de manière à ce que la distance entre le réseau (2) et le fond (34) de cette cuvette (27) soit plus petite dans la partie du milieu dans la direction longitudinale du réseau (2) que dans les parties des deux extrémités du réseau (2).

11. Détecteur (22) de conductibilité de la chaleur suivant la revendication 9 ou 10, **caractérisé en ce que** le fond (35) de l'autre des deux cuvettes (27, 28) est incurvé de manière concave dans la direction longitudinale du réseau (2) de manière à ce que la distance entre le réseau (2) et le fond (35) de cette cuvette (28) soit plus grande dans la région du milieu dans la direction longitudinale du réseau (2) que dans les régions des deux extrémités du réseau (2).

12. Détecteur (22) de conductibilité de la chaleur suivant l'une des revendications 9 à 11, dans lequel la une des deux cuvettes (27, 28) a les deux raccords (29, 30) de gaz, **caractérisé en ce que** le fond (34) de cette cuvette (27) est incurvé de manière convexe dans la direction transversale du réseau (2) de manière à ce que la distance entre le réseau (2) et le fond (34) de cette cuvette (27) soit plus petite dans la partie du milieu suivant la direction longitudinale du réseau (2) que dans les parties de bord du réseau (2).

13. Détecteur (22) de conductibilité de la chaleur suivant la revendication 12, **caractérisé en ce que** le fond (35) de l'autre des deux cuvettes (27, 28) est incurvé de manière convexe dans la direction longitudinale du réseau (2) de manière à ce que la distance entre le réseau (2) et le fond (35) de cette cuvette (28) soit plus grande dans la partie du milieu suivant la direction transversale du réseau (2) que dans les parties de bord du réseau (2).
